# EUROPÄISCHE PATENTSCHRIFT

(11) **EP 2 070 180 B1**
(45) Veröffentlichungstag und Bekanntmachung des Hinweises auf die Patenterteilung: **10.08.2011**
(21) Anmeldenummer: 07818590.7
(22) Anmeldetag: 01.10.2007
(51) Int. Cl.: H02J 13/00, H04B 3/54

(54) **VERFAHREN ZUM BETREIBEN SOWIE VERWENDUNG EINES UMRICHTERS ALS AKTIVE TONFREQUENZSPERRE**
METHOD FOR OPERATING AND USING A CONVERTER AS ACTIVE AUDIO FREQUENCY BLOCK
PROCÉDÉ POUR FAIRE FONCTIONNER ET UTILISER UN CONVERTISSEUR COMME SYSTÈME ACTIF D'ARRÊT DE FRÉQUENCES ACOUSTIQUES

(30) Priorität: 05.10.2006 DE 102006047503
(43) Veröffentlichungstag der Anmeldung: 17.06.2009
(73) Patentinhaber: REpower Systems AG, 22297 Hamburg (DE)
(72) Erfinder: LETAS, Heinz-Hermann, 23701 Süsel/Gross Meinsdorf (DE)
(74) Vertreter: Grebner, Christian Georg Rudolf
(86) Internationale Anmeldenummer: PCT/EP2007/008510
(87) Internationale Veröffentlichungsnummer: WO 2008/040513

(56) Entgegenhaltungen:
- EP-A- 0 868 006
- DE-T2- 69 527 750

## Beschreibung

Die Erfindung betrifft ein Verfahren zum Betreiben eines Umrichters, insbesondere einer Windenergieanlage, eines an ein elektrisches Wechselstromnetz anschließbaren stromerzeugenden Generatorsystems, insbesondere einer Windenergieanlage, sowie die Verwendung eines Verfahrens zum Betreiben eines Umrichters. Die Erfindung betrifft ferner ein Computerprogrammprodukt, das Programmcodemittel beinhaltet, einen Datenträger, ein stromerzeugendes Generatorsystem sowie eine Windenergieanlage.

Elektrische Wechselstromnetze werden üblicherweise mit einer Grundfrequenz von 50 Hz bzw. 60 Hz, etwa in Nordamerika, betrieben. Elektrische Stromerzeuger, beispielsweise Kraftwerke, Generatoren oder Windenergieanlagen, speisen bei dieser Grundfrequenz den erzeugten Strom in das Wechselstromnetz ein. Elektrische Klein- oder Großverbraucher, wie beispielsweise elektrische Haushaltsgeräte oder Industrieunternehmen, entnehmen die benötigte Leistung in Form von Wechselstrom aus dem Wechselstromnetz.

Wechselstromnetze werden auch zur Signalübertragung und -steuerung verwendet. Beispielsweise werden mittels so genannter Tonfrequenz-Rundsteueranlagen Signale in das Wechselstromnetz eingespeist und an Signalempfänger übermittelt. Mit "Tonfrequenz" (auch "TF") wird der Frequenzbereich von etwa 100 Hz bis etwa 500 Hz bezeichnet, der im Wechselstromnetz auch über größere Entfernungen nur unwesentlich abgeschwächt weitergeleitet wird. Typischerweise sendet jede Rundsteueranlage bei einer vom Netzbetreiber festgelegten Rundsteuerfrequenz im Tonfrequenzbereich.

Die Rundsteuersignale werden der Netzspannung an der Anschlussstelle einer Rundsteueranlage als zusätzliche Steuer- bzw. Wechselspannung überlagert. Die Amplitude der Steuerspannung liegt dabei im Bereich von weniger als 1 Prozent bis wenigen Prozent der Amplitude der Grundfrequenz im Wechselstromnetz. In diesem Zusammenhang werden die Begriffe "aufgeprägt", "aufaddiert" und "überlagert" synonym verwendet.

Auf dem Weg zum Empfänger des Rundsteuersignals wird das Signal durch an das Netz angeschlossene Verbraucher und Stromerzeuger abgeschwächt, indem die angeschlossenen Verbraucher oder Erzeuger einen Teil des Signalstroms aufnehmen und damit den verbleibenden Signalstrom im Wechselstromnetz verringern. Die Abschwächung ist unerwünscht, da die Signalpegel an sich schon klein sind. Um die Abschwächung möglichst gering zu halten, sollte möglichst wenig oder gar kein Signalstrom von den an das Wechselstromnetz angeschlossenen Verbrauchern oder Erzeugern aufgenommen werden.

Wieviel Signalstrom von einem Erzeuger oder einem Verbraucher aufgenommen wird, hängt von der Signalspannung und der Impedanz des jeweiligen Verbrauchers oder Erzeugers bei Rundsteuerfrequenz ab. Die Impedanz ist der frequenzabhängige (komplexe) Widerstand des Verbrauchers oder Erzeugers. Je höher der Realteil der Impedanz des Verbrauchers oder Erzeugers bei Rundsteuerfrequenz ist, desto weniger Signalleistung wird von dem Verbraucher oder Erzeuger absorbiert. Um einer Abschwächung von Rundsteuersignalen im Wechselstromnetz zu begegnen, ist somit eine hohe Impedanz des Erzeugers bzw. Verbrauchers bei Rundsteuerfrequenz erforderlich.

Im Folgenden wird auf die Situation bei Stromerzeugern, insbesondere Windenergieanlagen, eingegangen. Dieselben Überlegungen gelten in gleicher Weise auch für andere Stromerzeuger.

Windenergieanlagen, deren elektrische Komponenten Generator, Frequenzumrichter und Transformator umfassen, weisen in der Regel bereits genügend Impedanz bei Rundsteuerfrequenz auf, sodass keine Zusatzmittel eingesetzt werden müssen, um Rundsteuersignale im Wechselstromnetz zu erhalten. An manchen Standorten, insbesondere, wenn mit kleinen Signalpegeln gearbeitet wird, reicht das jedoch nicht aus.

Eine leichte Impedanzerhöhung ist mit passiven Mitteln möglich. Für eine Impedanzerhöhung von 10 bis 20 Prozent reicht es aus, einen bereits vorhandenen Transformator durch einen Transformator mit höherem Kurzschlussspannungswert zu ersetzen oder eine Umschaltung der Spannungsabgriffe durchzuführen, soweit dies möglich ist. Für eine stärkere Erhöhung der Impedanz bei Tonfrequenz kann auch eine passive Tonfrequenzsperre bzw. ein passiver Filter in Form von Kondensatorbänken eingesetzt werden.

Sowohl der Transformator mit höherem Kurzschlussspannungswert als auch die passive Tonfrequenzsperre haben einen höheren Platzbedarf aufgrund des größer dimensionierten Transformators bzw. wegen der Notwendigkeit groß dimensionierter Kondensatorbänke. Auch bedingen diese Maßnahmen erhöhte Verluste und zusätzliche Kosten. Die erreichbare Impedanzerhöhung ist begrenzt.

Eine starke Verbesserung wird mit einer aktiven Tonfrequenzsperre erzielt. Diese funktioniert so, dass Tonfrequenzströme, also Wechselströme bei Rundsteuer- bzw. Tonfrequenz, zunächst ungefiltert zusammen mit der Grundfrequenz aus dem Wechselstromnetz in die Anlage hineingelassen werden. Der gesamte in die Anlage fließende Strom wird in einer Gesamtstrommessung gemessen. Mittels eines auf Tonfrequenz oder Rundsteuerfrequenz eingestellten Frequenzfilters wird daraus der Anteil des Tonfrequenzstromes bzw. der Signalstrom ermittelt.

Der gemessene Tonfrequenzstrom wird einem Verstärker zugeführt, der einen zum Tonfrequenzstrom passenden Tonfrequenz-Kompensationsstrom erzeugt, der vor der Messstelle in das Netz zurückgespeist wird. Der in die Anlage fließende Tonfrequenzstrom und der in das Netz zurückgespeiste Tonfrequenz-Kompensationsstrom heben sich in der Summe auf, sodass die Gesamtanordnung bei Tonfrequenz als sehr hochohmig erscheint. Die Anordnung ist dadurch sehr wirkungsvoll, jedoch aufgrund des notwendigen großen Verstärkers teuer und hat einen großen Platzbedarf. Auch bei dieser Technik sind Verluste in der eingespeisten Leistung unvermeidlich.

Neben Rundsteuersignalen erzeugen auch andere Erzeuger oder Verbraucher Tonfrequenzströme im Wechselstromnetz, vor allem harmonische Oberschwingungen der Grundfrequenz des Wechselstromnetzes, aber auch andere Tonfrequenzanteile.

EP 0 868 006 A1 offenbart ein Verfahren zum Betreiben eines Umrichters, insbesondere einer Windenergieanlage, eines an ein elektrisches Wechselstromnetz anschließbaren stromerzeugenden Generatorsystems, insbesondere einer Windenergieanlage, wobei der Umrichter mittels einer den Umrichter regelnden Regelvorrichtung als aktive Tonfrequenzsperre betrieben wird, mit den folgenden Verfahrensschritten:
- Detektieren wenigstens eines Tonfrequenzstroms von mindestens einer vorgegebenen Tonfrequenz,
- Ermitteln eines an den Umrichter zu übermittelnden Wechselstromverlaufs in der Regelvorrichtung.

In DE 695 27 750 T2 ist eine Einrichtung zum Kompensieren einer durch eine niederohmige Last bedingte Dämpfung von Signalen der zentralen Laststeuerung in einem Stromversorgungsnetz offenbart. Die Einrichtung besteht aus einem Erfassungsstromkreis, der zum Aufspüren von Signalen der zentralen Laststeuerung dient, sowie einem Einspeisungsstromkreis, der mit dem Erfassungsstromkreis verbunden ist und in das Stromnetz und zwischen die Netzanschlüsse des Erfassungsstromkreises und der niederohmigen Last Signale einspeist, die die gleiche Frequenz haben, wie die Signale der zentralen Laststeuerung und eine Amplitude sowie eine Phase, die von der Amplitude und der Phase der Signale der zentralen Laststeuerung, die der Erfassungsstromkreis liefert, abhängen.

Der Erfindung liegt die Aufgabe zugrunde, bei einem Stromerzeuger, insbesondere einer Windenergieanlage, eine aktive Tonfrequenzsperre ohne oder mit nur geringem konstruktivem Aufwand bzw. weiteren Platzbedarf kostensparend zu realisieren.

Diese Aufgabe wird gelöst durch ein Verfahren zum Betreiben eines Umrichters, insbesondere einer Windenergieanlage, eines an ein elektrisches Wechselstromnetz anschließbaren stromerzeugenden Generatorsystems, insbesondere einer Windenergieanlage, wobei der Umrichter mittels einer den Umrichter regelnden Regelvorrichtung als aktive Tonfrequenzsperre betrieben wird, mit den folgenden Verfahrensschritten:
- Detektieren wenigstens eines Tonfrequenzstroms mindestens einer vorgegebenen Tonfrequenz,
- Ermitteln eines an den Umrichter zu übermittelnden Wechselstromverlaufs in der Regelvorrichtung, wobei dem Wechselstromverlauf wenigstens ein detektierter Tonfrequenzstrom wenigstens teilweise aufgeprägt ist,
- Erzeugen des Wechselstromverlaufs im Umrichter und
- Einspeisen des vom Umrichter erzeugten Wechselstromverlaufs in das Wechselstromnetz.

Mittels des erfindungsgemäßen Verfahrens wird die Funktion der aktiven Tonfrequenzsperre in einen schon vorhandenen Umrichter bzw. Frequenzumrichter des stromerzeugenden Generatorsystems integriert. Der bei einer herkömmlichen aktiven Tonfrequenzsperre notwendige externe Verstärker wird eingespart. Mit dem Umrichter bzw. Frequenzumrichter in der Funktion der aktiven Tonfrequenzsperre können prinzipiell sowohl netzseitige als auch generatorseitige, d. h. vom Generator bzw. vom generatorsystem erzeugte, Tonfrequenzströme gesperrt werden.

Im Rahmen der Erfindung wird unter einem Umrichter sowohl ein Frequenzumrichter als auch Wechselrichter verstanden. Dabei wird als Wechselrichter ebenfalls ein Gleichrichter verstanden.

Im vorliegenden Zusammenhang bedeutet "wenigstens ein Tonfrequenzstrom" einen oder mehrere Tonfrequenzströme bei einer oder mehreren Frequenzen, beispielsweise eine oder mehrere bekannte Rundsteuerfrequenzen und/oder harmonische Oberschwingungen der Grundfrequenz des Wechselstromnetzes.

Um Rundsteuersignale im Netz ungedämpft weiterzuführen und gegebenenfalls Harmonische der Grundfrequenz im Netz auszuschalten, werden vorzugsweise netzseitige Tonfrequenzströme detektiert. Dies bedeutet, dass der Gesamtstrom des Wechselstroms im Wechselstromnetz auf der Netzseite der Anlage gemessen wird und Tonfrequenzströme daraus extrahiert werden.

Dies geschieht vorteilhafterweise mittels wenigstens eines Bandpassfilters, mittels dessen aus dem netzseitigen Wechselstrom netzseitige Tonfrequenzströme herausgefiltert werden und an die Regelvorrichtung weitergeleitet werden. Dies ist von Vorteil, da eine unmittelbare und schnelle Reaktion beispielsweise auf scharfflankige und kurze Rundsteuersignale möglich ist, die durch den Bandpassfilter ohne Verzögerung an die Regelvorrichtung weitergeleitet werden.

Alternativ oder ergänzend dazu werden die netzseitigen Tonfrequenzströme vorzugsweise in bzw. mittels der Regelvorrichtung detektiert. Dabei wird der gemessene Verlauf des netzseitigen Wechselstroms im gesamten Frequenzbereich an die Regelvorrichtung weitergeleitet und dort einer Analyse unterzogen, beispielsweise einer Fourier-Analyse oder einer Vektor-Analyse. Weitere Komponenten, wie beispielsweise Bandpassfilter, sind nicht erforderlich. Diese Vorgehensweise zieht gegenüber der Benutzung eines Bandpassfilters eine geringe Zeitverzögerung in der Erkennung der Rundsteuersignale nach sich, abhängig von der Analysemethode und der Schnelligkeit der Regelvorrichtung. Solange die Zeitverzögerung kurz ist gegenüber der Signallänge, ist das unproblematisch.

Um vom Generator erzeugte Tonfrequenzströme herauszufiltern, ist erfindungsgemäß vorgesehen, dass generatorseitige Tonfrequenzströme detektiert werden.

Vorteilhaft ist es in einer Ausgestaltung, wenn die Tonfrequenzströme an einem Netzeinspeisepunkt erfasst werden und/oder auf diesen bzw. auf einen Netzeinspeisepunkt geregelt werden. Außerdem ist es denkbar, den Umrichter dadurch zu nutzen, dass mittels des Umrichters ein Rundsteuersignal eingespeist wird.

Vorzugsweise ist überdies vorgesehen, dass die generatorseitigen Tonfrequenzströme mittels wenigstens eines Bandpassfilters aus dem generatorseitigen Wechselstrom herausgefiltert und an die Regelvorrichtung weitergeleitet werden und/oder in der Regelvorrichtung detektiert werden.

Konstruktiver Aufwand wird vermindert und die Selektivität und damit die Impedanz beispielsweise bei Rundsteuerfrequenz wird erhöht, wenn vorzugsweise die aktive Tonfrequenzsperre auf einen vorbestimmten begrenzten, d.h. engen Frequenzbereich für monofrequente oder schmalbandige netzseitige Signale einstellbar oder eingestellt ist. Unter einem engen bzw. schmalbandigen Frequenzbereich wird dabei ein Frequenzbereich verstanden, der kleiner ist als die Grundschwingung des Wechselstromnetzes, so dass er nicht mit harmonischen Oberschwingungen der Grundfrequenz überlappt.

Vorteilhafterweise ist der enge bzw. vorbestimmte begrenzte Frequenzbereich auf eine Rundsteuerfrequenz einstellbar oder eingestellt, wobei im Frequenzspektrum benachbarte harmonische Oberfrequenzen der Grundfrequenz gegenüber der Rundsteuerfrequenz abgeschwächt werden. Wenn die Signale aus dem Bandpassfilter hinsichtlich ihrer Stärke integriert werden, wird dann die Stärke des Rundsteuersignals sehr genau ermittelt. So wird vermieden, dass das Rundsteuersignal mittels des Frequenzumrichters überkompensiert wird. Das Gleiche gilt für eine Fourier-Analyse und für andere Frequenzanalysen in der Regelvorrichtung, wie beispielsweise Vektor-Analysen auf der Basis von Koordinatensystemen, die mit fest wählbaren Frequenzen, etwa Rundsteuerfrequenz, oder einstellbaren Frequenzen umlaufen.

Alternativ oder zusätzlich zu einer Spezialisierung auf Rundsteuerfrequenzen ist vorzugsweise vorgesehen, dass der vorbestimmte begrenzte Frequenzbereich auf wenigstens eine harmonische Oberfrequenz der Grundfrequenz einstellbar ist oder eingestellt ist. Auf diese Weise wird eine gezielt ausgewählte Oberfrequenz der Grundfrequenz bei der Tonfrequenzsperrung berücksichtigt. Ebenso ist vorgesehen, mehrere Frequenzen bzw. Frequenzbereiche parallel zu bearbeiten, entweder mittels mehrerer Bandpassfilter, die entsprechend der Frequenzen eingestellt sind, oder mittels geeigneter Analysemethoden in der Regelvorrichtung.

Um die aktive Tonfrequenzsperre mittels des Umrichters zu realisieren, ist vorzugsweise vorgesehen, dass die netzseitigen Tonfrequenzströme dem vom Umrichter erzeugten Spannungsverlauf aufgeprägt werden. Der Grundfrequenz des Wechselstromnetzes, die vom Umrichter erzeugt und in das Wechselstromnetz eingespeist wird, sind somit die gemessenen Tonfrequenzströme der Grundfrequenz überlagert bzw. aufaddiert.

Bekannte Umrichter bzw. Frequenzumrichter werden mittels eines pulsbreitenmodulierten Signals angesteuert. Das führt dazu, dass eine generatorseitig am Umrichter bzw. Frequenzumrichter oder Wechselrichter anliegende Gleichspannung für kurze Zeitabschnitte mit einer Schaltfrequenz eines Umrichters oder Frequenzumrichters von einigen kHz, beispielsweise 2,5 kHz bis 10 kHz, an das Wechselstromnetz weitergegeben wird. Die Länge der Zeitabschnitte, für die die Spannung an das Wechselstromnetz weitergegeben wird, ändert sich entsprechend der einzuspeisenden Wechselspannung. Im Maximum des Wechselspannungsverlaufs sind die an das Netz abgegebenen Pulse breit. Bei einem Nulldurchgang verkürzt sich die Länge der Pulse auf Null. Beispielsweise beträgt die maximale Länge eines Pulses bei einem Umrichter mit einer Schaltfrequenz von 2,5 kHz etwa 0,4 ms. Die harmonischen Oberschwingungen der Schaltfrequenz liegen deutlich oberhalb des Tonfrequenzbereichs.

Mittels pulsbreitenmodulierter Umrichter bzw. Frequenzumrichter lassen sich nach dem Nyquist-Theorem Signalformen modulieren, die Frequenzanteile bis zur Hälfte der Schaltfrequenz des Umrichters beinhalten. Die Qualität der Nachbildung des Signalverlaufs steigt für niedrige Frequenzen. Vorzugsweise wird zur Sperrung von Tonfrequenzströmen im oberen Tonfrequenzbereich ein Umrichter bzw. Frequenzumrichter mit hoher Schaltfrequenz eingesetzt. Wenn die netzseitigen Tonfrequenzströme auf den vom Umrichter erzeugten Spannungsverlauf mit gleicher oder veränderter Phase aufgeprägt werden, werden die netzseitigen Tonfrequenzströme entweder vollständig kompensiert, wodurch die Anlage bei diesen Tonfrequenzen besonders hochohmig erscheint, oder aber es wird mittels einer Phasenverschiebung induktive oder kapazitive Blindleistung bei der entsprechenden Tonfrequenz eingestellt, was wegen am Netz angeschlossener Verbraucher erforderlich sein kann. Für Rundsteuerfrequenzen ist eine gleichphasige Aufprägung des Tonfrequenzstroms optimal, um Rundsteuersignale ungeschwächt im Netz zu erhalten.

Um zu verhindern, dass vom Generator erzeugte Tonfrequenzströme in das Wechselstromnetz gelangen und die Qualität des Wechselstroms darin verschlechtern, ist vorzugsweise vorgesehen, dass die generatorseitigen Tonfrequenzströme dem vom Umrichter bzw. Frequenzumrichter erzeugten Spannungsverlauf mit umgekehrter Phase aufgeprägt werden.

Hiermit wird darauf reagiert, dass auf der Gleichspannung, die generatorseitig am Frequenzumrichter anliegt, ein vom Generator erzeugter Tonfrequenzstrom, etwa eine Oberschwingung der Rundfrequenz, aufgeprägt ist, was zu einer Schwankung der Gleichspannungsamplitude mit der entsprechenden Frequenz führt. Ohne Kompensation würde diese Schwankung über den Umrichter bzw. Frequenzumrichter an das Wechselstromnetz weitergegeben werden.

Anschaulich bedeutet die vorgeschlagene Maßnahme, dass einem Wellenberg der Spannungsamplitude des Tonfrequenzstroms ein Wellental des durch den Umrichter erzeugten Kurvenverlaufs entgegengesetzt wird und umgekehrt, so dass Wellenberg und Wellental sich auslöschen. Der vom Generator erzeugte Tonfrequenzstrom wird nicht in das Wechselstromnetz eingespeist.

Eine vorteilhafte Weiterbildung erfährt das erfindungsgemäße Verfahren, wenn mittels der Regelvorrichtung die Phasenverschiebung der vom Umrichter erzeugten Grundfrequenz zum netzseitigen Wechselstrom einstellbar ist oder eingestellt wird. Auf diese Weise wird ein induktiver oder kapazitiver Blindwiderstand der Windenergieanlage bzw. des Stromerzeugers flexibel auf die Anforderungen durch Verbraucher im Netz angepasst.

In der Regelvorrichtung erfolgt die Erzeugung des den Umrichter steuernden Signals vorzugsweise derart, dass durch Addition der Grundfrequenz des Wechselstromnetzes und der Frequenzen der netzseitigen und/oder generatorseitigen Tonfrequenzströme mit ihren jeweiligen Phasen in der den Umrichter regelnden Regeleinrichtung ein Spannungsverlauf gebildet wird. In der Regelvorrichtung wird somit ein Kurvenverlauf gebildet, der sich aus der Grundfrequenz des Wechselstromnetzes, gegebenenfalls mit einer Phasenverschiebung, sowie den höherfrequenten Wellenformen der detektierten Tonfrequenzströme mit ihren jeweiligen Phasenverschiebungen zusammensetzt. Dieser Kurvenverlauf wird in geeigneter Weise auf den Umrichter übertragen, der daraufhin aus der generatorseitig anliegenden Gleichspannung einen entsprechenden netzseitigen Spannungsverlauf abbildet und in das Wechselstromnetz einspeist.

Vorteilhafterweise wird der Umrichter mittels einer als Regelvorrichtung ausgebildeten Datenverarbeitungsanlage geregelt.

Vorzugsweise umfasst die Regelvorrichtung eine Datenverarbeitungsanlage, insbesondere umfassend wenigstens einen Computer oder Prozessor. Wenn die Datenverarbeitungsanlage aus mehreren Computern oder Prozessoren besteht, ist beispielsweise jeder Computer oder Prozessor für eine vorgewählte Tonfrequenz zuständig. Als Prozessoren sind auch digitale Signalprozessoren (DSP) geeignet. Abhängig von der Rechenkapazität werden eine oder mehrere Frequenzen einem Computer bzw. Prozessor zugeordnet. Der eine Computer bzw. ein zentraler Computer der Datenverarbeitungsanlage erhält die Ergebnisse zu den einzelnen Tonfrequenzströmen und ihren Phasen und errechnet daraus einnen vom Frequenzumrichter zu erzeugenden Wechselspannungs- bzw. Wechselstromverlauf, der in das Wechselstromnetz einzuspeisen ist.

Vorzugsweise arbeitet die Regelvorrichtung phasengleich mit der Wechselspannung im Wechselstromnetz, im so genannten "Mitsystem", bei Frequenz + 50 Hz (+ 60 Hz). Vorzugsweise arbeitet oder wird die Regelvorrichtung zusätzlich in der der Wechselspannung im Stromnetz entgegengesetzten Phase betrieben, im so genannten "Gegensystem" bei Frequenz - 50 Hz (oder - 60 Hz). Vorteilhafterweise umfasst die Regelvorrichtung auch ein Regelsystem, das bei Frequenz "Tonfrequenz" arbeitet, beispielsweise bei Rundsteuerfrequenz.

Falls die Regelvorrichtung nicht für alle Aufgaben genügend Rechenkapazität besitzt, ist vorzugsweise vorgesehen, dass bei oder durch Aktivierung des Betreibens des Umrichters als aktive Tonfrequenzsperre der Betrieb der Regelvorrichtung in der der Wechselspannung im Wechselstromnetz entgegengesetzen Phase, also im Gegensystem, deaktiviert wird. Somit wird der Betrieb der Regelvorrichtung im Gegensystem gestoppt und die freigewordene Rechenkapazität bzw. das freigewordene Regelsystem dem Betrieb im Tonfrequenzsystem zugeordnet.

Viele Generatorsysteme besitzen zwei Wechselrichter, einen generatorseitigen Wechselrichter (Gleichrichter) und einen netzseitigen Wechselrichter. Bei Vollumrichtersystemen wird die gesamte vom Generator in Form von Wechselstrom erzeugte elektrische Leistung vom generatorseitigen Wechselrichter gleichgerichtet und vom netzseitigen Wechselrichter in eine der Netzfrequenz entsprechende Wechselspannung umgerichtet.

Bei doppelt gespeisten asynchronen Maschinen, wie sie in vielen Windenergieanlagen verwendet werden, sind ebenfalls zwei Wechselrichter vorhanden. Bei den darin eingesetzten Asynchron-Generatoren steht ihr Statorkreis in direkter Verbindung mit dem Wechselstromnetz und wird an sich schon phasen- und frequenzgleich betrieben. Der Rotorkreis ist über ein Umrichtersystem mit zwei Wechselrichtern mit dem Wechselstromnetz verbunden. In beiden Fällen wird vorteilhafterweise einer der beiden Wechselrichter als aktive Frequenzsperre betrieben.

Wenn der netzseitige Wechselrichter als aktive Frequenzsperre betrieben wird, hat es den Vorteil, dass unmittelbar ohne weitere Umrichter die berechnete Spannungskurve in das Netz eingespeist wird. Dies ist bei Vollumrichtersystemen vorteilhafterweise der Fall.

Darüber hinaus gibt es den Fall, dass mehrere Umrichter parallel vorhanden sind, wobei jeder Umrichter eine Frequenz erzeugen kann oder könnte. In diesem Fall weist das Generatorsystem mehrere Umrichter auf, wobei jeder Umrichter als aktive Frequenzsperre betrieben wird.

Bei doppeltgespeisten asynchronen Maschinen wird vorzugsweise der netzseitige Wechselrichter als aktive Frequenzsperre betrieben, da dieser gegenüber dem maschinenseitigen Umrichter ein lineares Übertragungsverhalten besitzt. Daraus ergeben sich Vorteile bei der Auslegung, sofern der Generator bezüglich seines Übertragungsverhaltens in Bezug auf Oberschwingungen die Tonfrequenzen gut übertragen kann. Dieses Übertragungsverhalten wird vorzugsweise bei der Berechnung des Spannungsverlaufs in der Regelvorrichtung berücksichtigt. Ein solches Generatorsystem ist vorteilhafterweise in einer Windenergieanlage umfasst.

Weiterhin wird die Aufgabe mittels eines Verfahrens zum Betreiben einer Windenergieanlage, die einen Umrichter bzw. Frequenzumrichter oder Wechselrichter aufweist, gelöst, wobei der Umrichter bzw. Frequenzumrichter oder Wechselrichter wie voranstehend beschrieben, betrieben wird. Zur Vermeidung von Widerholungen wird auf die obigen Ausführungen ausdrücklich verwiesen.

Die der Erfindung zugrunde liegende Aufgabe wird ferner durch die Verwendung eines erfindungsgemäßen vorstehend beschriebenen Verfahrens zum Betreiben eines Umrichters bzw. Frequenzumrichters oder Wechselrichters, insbesondere einer Windenergieanlage, eines an ein elektrisches Wechselstromnetz anschließbaren stromerzeugenden Generatorsystems, wobei der Umrichter mittels einer den Umrichter regelnden Regelvorrichtung als aktive Tonfrequenzsperre gegenüber netzseitigen und/oder generatorseitigen Tonfrequenzströmen betrieben wird, gelöst. Hier ergeben sich die gleichen Vorteile wie bei dem Verfahren zum Betreiben eines Umrichters als aktive Tonfrequenzsperre.

Die der Erfindung zugrunde liegende Aufgabe wird auch durch ein Computerprogrammprodukt, das Programmcodemittel beinhaltet, gelöst, das ein erfindungsgemäßes oben beschriebenes Verfahren implementiert, wenn es auf einer Datenverarbeitungsanlage ausgeführt wird, die als Regelvorrichtung ausgebildet ist. Der Betrieb des Umrichters bzw. Frequenzumrichters oder Wechselrichters als aktive Tonfrequenzsperre wird somit in einfacher Weise durch die Verwendung einer geänderten Regelungssoftware in der Regelvorrichtung bewirkt. Weitere konstruktive Maßnahmen sind nicht erforderlich. Vorhandene Strommesspunkte und gegebenenfalls vorhandene Bandpassfilter sind weiter nutzbar. Das Computerprogrammprodukt stellt Programmcodemittel zur Verfügung, mit denen insbesondere der an den Umrichter zu übermittelnde Wechselstromverlauf ermittelt und an den Umrichter übermittelt wird und gegebenenfalls Tonfrequenzströme bei vorgebbaren oder vorgegebenen Frequenzen detektiert werden.

Die Aufgabe wird ebenfalls gelöst durch einen Datenträger mit darauf gespeichertem Computerprogrammprodukt, wie oben beschrieben.

Schließlich wird die der Erfindung zugrunde liegende Aufgabe gelöst durch ein stromerzeugendes Generatorsystem mit Regelvorrichtung für einen Umrichter bzw. Frequenzumrichter oder Wechselrichter mit dem oben beschriebenen Computerprogrammprodukt sowie einer Windenergieanlage mit entsprechendem stromerzeugenden Generatorsystem.

Mittels des erfindungsgemäßen Verfahrens, der Verwendung, des Computerprogrammprodukts, des Generatorsystems und der Windenergieanlage wird eine aktive Tonfrequenzsperre mit guter Wirksamkeit geschaffen, die keinen zusätzlichen Platzbedarf hat und vorhandene Umrichter nutzt. Prinzipiell entstehen keine zusätzlichen Hardwarekosten, wenn der Umrichter-Controller, also die Regelvorrichtung, Rechenkapazitätsreserven hat. Es ist lediglich eine entsprechende Software erforderlich. Falls der Controller zu stark begrenzt ist, sind Teile der Gegensystemregelung verwendbar, indem sie zu einer Tonfrequenzregelung umfunktioniert wird.

Die Tonfrequenzsperre blockiert Tonfrequenzströme von außen. Rundsteuersignale werden ohne Abschwächung im Netz weitergeleitet. Vom Generator erzeugte Tonfrequenzströme werden kompensiert. Die Frequenz bzw. Frequenzen für die Tonfrequenzregelung ist bzw. sind flexibel und einfach einstellbar. Eine gute Wirkung der aktiven Tonfrequenzsperre wird besonders bei tiefen Tonfrequenzen erzielt.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: ein Prinzipschaltbild eines Wechselstromnetzes mit Rundsteuersender und Windenergieanlage nach dem Stand der Technik,
- Fig. 2: ein Prinzipschaltbild der Topologie einer bekannten Windenergieanlage,
- Fig.3: ein Prinzipschaltbild einer bekannten Windenergie- anlage mit doppeltgespeistem Asynchrongenerator,
- Fig. 4: ein Ersatzschaltbild einer bekannten Windenergie- anlage
- Fig. 5: ein Ersatzschaltbild einer Windenergieanlage mit er- höhter passiver Impedanz nach dem Stand der Technik,
- Fig. 6: ein Ersatzschaltbild einer Windenergieanlage mit be- kannter externer aktiver Tonfrequenzsperre und
- Fig. 7: ein Ersatzschaltbild einer Windenergieanlage mit er- findungsgemäßer interner aktiver Tonfrequenzsperre.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

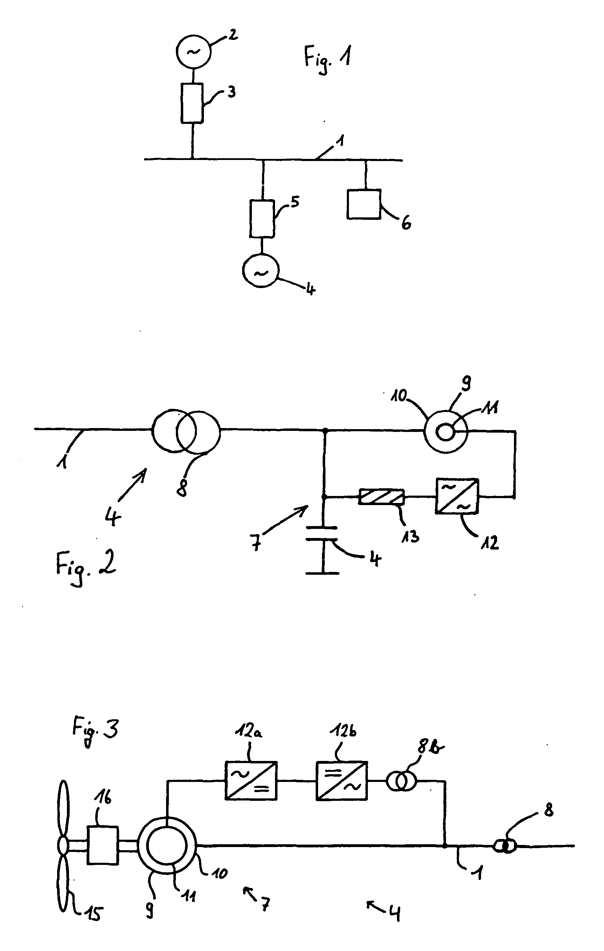

Fig. 1 zeigt ein Prinzipschaltbild eines Wechselstromnetzes 1 mit Rundsteuersender 2 und Windenergieanlage 4 nach dem Stand der Technik. Das Wechselstromnetz 1 weist einen Anschluss an einen Rundsteuersender 2 aus, der eine Anschlussimpedanz 3 hat. Der Rundsteuersender 2 speist Steuersignale bei Tonfrequenz in das Wechselstromnetz 1 oder Netz 1 ein. Die Steuersignale sind für einen netzabwärts angeschlossenen Verbraucher bzw. Empfänger 6 bestimmt.

Zwischen dem Rundsteuersender 2 und dem Empfänger 6 ist eine Windenergieanlage 4 mit frequenzabhängiger Impedanz 5 an das Netz 1 angeschlossen. Ein Teil des Signalstroms wird in die Windenergieanlage 4 abgezweigt und steht nicht mehr im Netz 1 zur Verfügung. Der Empfänger 6 empfängt ein abgeschwächtes Steuersignal, das unter Umständen seinen Zweck nicht mehr erfüllt.

In Fig. 2 ist ein Prinzipschaltbild der Topologie einer Windenergieanlage 4 nach dem Stand der Technik dargestellt. Ein Generator 9 mit einem Statorkreis 10 und einem Rotorkreis 11 ist mit seinem Statorkreis 10 über einen Maschinentransformator 8 an das Wechselstromnetz 1 angeschlossen. Vom Rotorkreis 11 wird Leistung über einen Frequenzumrichter 12 und eine Netzdrossel 13 an den Maschinentransformator 8b weitergeleitet, wobei parallel zum Rotorkreis 11 ein Filter 14 angeschlossen ist, um hochfrequente Störungen aus dem Signal zu entfernen. Das Generatorsystem 7 umfasst den Generator 9, den Frequenzumrichter 12, die Netzdrossel 13 und den Filter 14.

Als ein Ausführungsbeispiel zeigt Fig. 3 das Prinzipschaltbild einer bekannten Windenergieanlage 4 mit doppeltgespeistem Asynchrongenerator. Die Windenergieanlage 4 entnimmt dem Wind mittels eines Rotors 15 Leistung und übermittelt diese über ein Getriebe 16 an den asynchronen Generator 9. Der Statorkreis 10 ist direkt an das Wechselstromnetz 1 angeschlossen. Der Rotorkreis 11 ist über einen Frequenzumrichter 12, der einen generatorseitigen Frequenzumrichter 12a und einen netzseitigen Frequenzumrichter 12b umfasst, sowie einen Maschinentransformator 8 mit dem Netz verbunden. Der doppeltgespeiste Asynchrongenerator verfügt über einen regelbaren Nennschlupfbereich und eine regelbare Blindleistungsabgabe.

Der generatorseitige Wechselrichter 12a oder der netzseitige Wechselrichter 12b wird als aktive Tonfrequenzsperre angesteuert. Der generatorseitige Wechselrichter 12a verfügt über größere Reserven, so dass dieser vorzugsweise angesteuert wird. Wenn eine direktere Steuerung gewünscht ist, wird der netzseitige Wechselrichter 12b angesteuert.

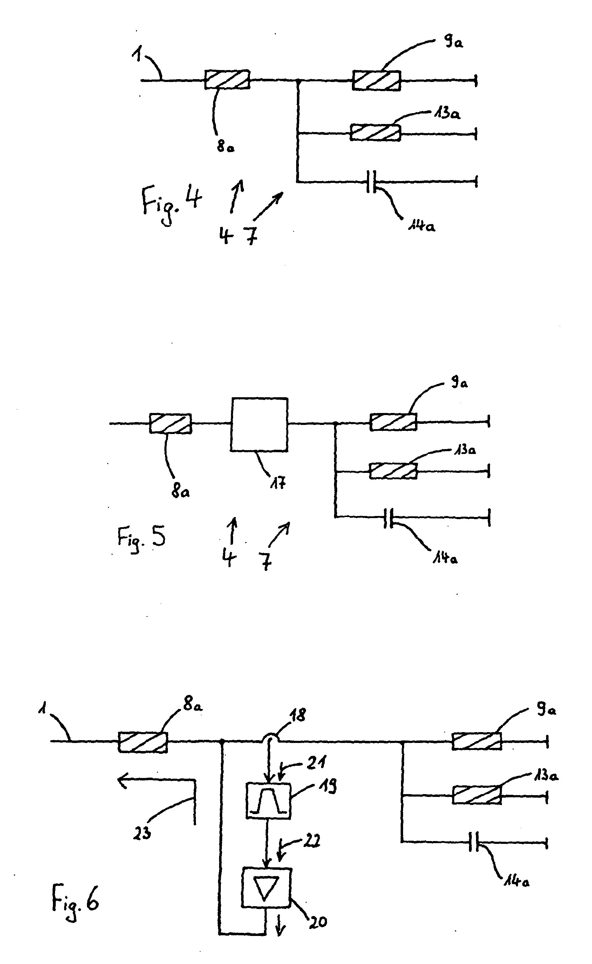

Das Ersatzschaltbild einer Windenergieanlage nach dem Stand der Technik ist in Fig. 4 gezeigt. Ausgehend vom Wechselstromnetz 1 ergibt sich eine Reihenschaltung aus der Transformatorimpedanz 9a und einer Parallelschaltung der Impedanzen des Generators 9a, der Drossel 13a und des Filters 14a. Diese Impedanzen zusammen ergeben die frequenzabhängige Gesamtimpedanz des Generatorsystems 7 gegenüber dem Wechselstromnetz 1.

Ein Ersatzschaltbild einer Windenergieanlage mit erhöhter passiver Impedanz nach dem Stand der Technik ist in Fig. 5 gezeigt, wo in Serie mit der Maschinentransformatorimpedanz 8a eine Zusatzimpedanz 17 geschaltet ist, die die Gesamtimpedanz der Anlage erhöht. Beispiele hierfür sind größere Transformatorimpedanzen und passive Tonfrequenzsperren.

Eine bekannte aktive Tonfrequenzsperre ist anhand eines Ersatzschaltbildes einer Windenergieanlage in Fig. 6 gezeigt. Der im Wechselstromnetz 1 fließende Strom wird einschließlich des Tonfrequenzstroms über die Impedanz 8a des Maschinentransformators in die Anlage eingeleitet und zwischen der Impedanz 8a des Maschinentransformators und der Parallelschaltung der übrigen Impedanzen gemessen. Der gemessene Gesamtstrom 21, der sich aus Nutzstrom und Tonfrequenzstrom zusammensetzt, wird durch ein Bandpassfilter 19, der auf Tonfrequenz gestimmt ist, gefiltert. Der gemessene Tonfrequenzstrom 22 wird einem Verstärker 20 zugeführt, der einen Tonfrequenzkompensationsstrom 23 über den Maschinentransformator 8 in das Netz 1 zurückgibt. Die Tonfrequenzströme, die in die Anlage hineinfließen und vom Verstärker an das Netz zurückgegeben werden, heben sich auf, so dass am Netzanschluss die Gesamtimpedanz der Windenergieanlage 4 hoch bis nahezu unendlich ist.

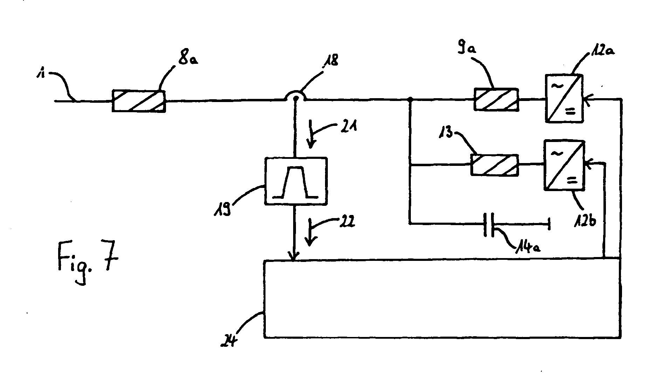

Fig. 7 stellt ein Ersatzschaltbild einer Windenergieanlage 4 mit erfindungsgemäßer interner aktiver Tonfrequenzsperre dar. Wie in Fig. 6 wird auch hier der Gesamtstrom 18 zwischen dem Maschinentransformator 8 und der Abzweigung in die Parallelschaltung der weiteren Impedanzen des Generators 9, der Netzdrossel 13 und des Filters 14 gemessen. Der Gesamtstrom 18 wird über einen Bandpassfilter 19 in die Regelvorrichtung 24 geführt. Wenn die Frequenzanalyse in der Regelvorrichtung 24 stattfindet, entfällt der Bandpassfilter 19.

Die Regelvorrichtung 24 umfasst einen oder mehrere Computer bzw. Prozessoren, die einerseits für die Erzeugung des von dem oder den Umrichtern zu erzeugenden Signals zuständig sind und andererseits für die Analyse einer oder mehrerer netzseitiger und/oder generatorseitiger Tonfrequenzströme. In der Regelvorrichtung 24 werden eine oder mehrere netzseitige und/oder generatorseitige Tonfrequenzsignale erfasst und mit der Grundfrequenz des Netzes 1 zu einem Gesamtwellenzug addiert, die dem netzseitigen Wechselrichter 12b und/oder dem generatorseitigen Wechselrichter 12a übermittelt werden, der bzw. die eine entsprechende Wellenform erzeugt bzw. erzeugen.

Zur Tonfrequenzregelung wird am Wechselrichter 12a bzw. 12b eine Tonfrequenzspannung so geführt, dass der Gesamtstrom keinen oder nur noch einen sehr geringen Tonfrequenzstrom enthält. Bei Vollumrichtern spielt die Generatorseite keine Rolle und wird nicht weiter betrachtet. Gegenüber dem Netz verbleiben der netzseitige Wechselrichter 12b mit der Impedanz 13. Es können aber bei großen Leistungen zwei oder mehr Wechselrichter am Netz arbeiten und gegebenenfalls auch unabhängig voneinander geregelt werden.

Mit der Erfindung wird mit geringen Kosten und geringem baulichen Aufwand erreicht, Rundsteuersignale im Tonfrequenzbereich im Netz aufrecht zu erhalten und gegebenenfalls netzseitige und/oder generatorseitige Oberschwingungen der Netzgrundfrequenz zu unterdrücken bzw. an Verbrauchererfordernisse am Netz anzupassen. Durch einfachen Umbau von Regelungssystemen wird auch bei knapper Rechenkapazität eine interne aktive Tonfrequenzsperre verwirklicht. Das erfindungsgemäße Verfahren lässt sich mit allen Synchron- und Asynchrongeneratormaschinen mit Frequenzumrichtern betreiben. Insbesondere wird eine Windenergieanlage bzw. ein Frequenzumrichter einer Windenergieanlage gemäß dem voranstehend beschriebenen Verfahren betrieben.

### Bezugszeichenliste

- 1: Wechselstromnetz
- 2: Rundsteuersender
- 3: Anschlussimpedanz des Rundsteuersenders
- 4: Windenergieanlage
- 5: Impedanz der Windenergieanlage
- 6: Weitere Endverbraucher bzw. Empfänger
- 7: Generatorsystem
- 8: Maschinentransformator
- 8a: Impedanz des Maschinentransformators
- 8b: Maschinentransformator
- 9: Generator
- 9a: Impedanz des Generators
- 10: Statorkreis
- 11: Rotorkreis
- 12: Frequenzumrichter
- 12a: generatorseitiger Wechselrichter
- 12b: netzseitiger Wechselrichter
- 13: Netzdrossel
- 13a: Netzdrosselimpedanz
- 14: Filter (vereinfacht)
- 14a: Filterimpedanz
- 15: Rotor
- 16: Getriebe
- 17: Zusatzimpedanz
- 18: Gesamtstrommessung
- 19: Bandpassfilter
- 20: Verstärker
- 21: Gesamter gemessener Strom (Nutzstrom + TF-Strom)
- 22: aufgenommener TF-Strom
- 23: TF-Kompensationsstrom
- 24: Regelvorrichtung

## Patentansprüche

1. Verfahren zum Betreiben eines Umrichters, insbesondere einer Windenergieanlage, (12, 12a, 12b) eines an ein elektrisches Wechselstromnetz (1) anschließbaren stromerzeugenden Generatorsystems (7), insbesondere einer Windenergieanlage, wobei der Umrichter (12, 12a, 12b) mittels einer den Umrichter (12, 12a, 12b) regelnden Regelvorrichtung (24) als aktive Tonfrequenzsperre betrieben wird, mit den folgenden Verfahrensschritten:
- Detektieren wenigstens eines Tonfrequenzstroms von mindestens einer vorgegebenen Tonfrequenz,
- Ermitteln eines an den Umrichter (12, 12a, 12b) zu übermittelnden Wechselstromverlaufs in der Regelvorrichtung (24), wobei dem Wechselstromverlauf wenigstens ein detektierter Tonfrequenzstrom wenigstens teilweise aufgeprägt ist,
- Erzeugen des Wechselstromverlaufs im Umrichter (12, 12a, 12b) und
- Einspeisen des vom Umrichter (12, 12a, 12b) erzeugten Wechselstromverlaufs in das Wechselstromnetz (1).

2. Verfahren nach Anspruch 1, **dadurch gekennzeichnet, dass** netzseitige Tonfrequenzströme detektiert werden und/oder dass die Tonfrequenzströme an einem Netzeinspeisepunkt erfasst werden und/oder auf einen Netzeinspeisepunkt geregelt werden und/oder dass mittels des Umrichters ein Rundsteuersignal eingespeist wird.

3. Verfahren nach Anspruch 2, **dadurch gekennzeichnet, dass** die netzseitigen Tonfrequenzströme mittels wenigstens eines Bandpassfilters (19) aus dem netzseitigen Wechselstrom herausgefiltert werden und an die Regelvorrichtung (24) weitergeleitet werden oder dass die netzseitigen Tonfrequenzströme in der Regelvorrichtung (24) detektiert werden.

4. Verfahren nach einem der Ansprüche 1 bis 3, **dadurch gekennzeichnet, dass** generatorseitige Tonfrequenzströme detektiert werden, wobei die generatorseitigen Tonfrequenzströme mittels wenigstens eines Bandpassfilters aus dem generatorseitigen Wechselstrom herausgefiltert und an die Regelvorrichtung (24) weitergeleitet werden und/oder in der Regelvorrichtung (24) detektiert werden.

5. Verfahren nach einem der Ansprüche 1 bis 4, **dadurch gekennzeichnet, dass** die aktive Tonfrequenzsperre auf einen vorbestimmten begrenzten Frequenzbereich für monofrequente oder schmalbandige netzseitige Signale einstellbar oder eingestellt ist, wobei der vorbestimmte begrenzte Frequenzbereich auf eine Rundsteuerfrequenz einstellbar oder eingestellt ist, wobei im Frequenzspektrum benachbarte harmonische Oberfrequenzen der Grundfrequenz gegenüber der Rundsteuerfrequenz abgeschwächt werden oder wobei der vorbestimmte begrenzte Frequenzbereich auf wenigstens eine harmonische Oberfrequenz der Grundfrequenz einstellbar ist oder eingestellt ist.

6. Verfahren nach einem der Ansprüche 2 bis 5, **dadurch gekennzeichnet, dass** die netzseitigen Tonfrequenzströme dem vom Umrichter (12, 12a, 12b) erzeugten Spannungsverlauf aufgeprägt werden, wobei die netzseitigen Tonfrequenzströme auf den vom Umrichter (12, 12a, 12b) erzeugten Spannungsverlauf mit gleicher oder veränderter Phase aufgeprägt werden.

7. Verfahren nach einem der Ansprüche 4 bis 6, **dadurch gekennzeichnet, dass** die generatorseitigen Tonfrequenzströme auf den vom Umrichter (12, 12a, 12b) erzeugten Spannungsverlauf mit umgekehrter Phase aufgeprägt werden.

8. Verfahren nach einem der Ansprüche 1 bis 7, **dadurch gekennzeichnet, dass** mittels der Regelvorrichtung (24) eine Phasenverschiebung der vom Umrichter (12, 12a, 12b) erzeugten Grundfrequenz zum netzseitigen Wechselstrom einstellbar ist oder eingestellt wird oder dass durch Addition der Grundfrequenz des Wechselstromnetzes (1) und der Frequenzen der netzseitigen und/oder generatorseitigen Tonfrequenzströme mit ihren jeweiligen Phasen in der den Umrichter (12, 12a, 12b) regelnden Regelvorrichtung (24) ein Spannungsverlauf gebildet wird.

9. Verfahren nach einem der Ansprüche 1 bis 8, **dadurch gekennzeichnet, dass** der Umrichter (12, 12a, 12b) mittels einer als Regelvorrichtung (24) ausgebildeten Datenverarbeitungsanlage geregelt wird und/oder dass die Regelvorrichtung (24) phasengleich mit der Wechselspannung im Wechselstromnetz (1) arbeitet oder betrieben wird, wobei die Regelvorrichtung (24) zusätzlich in der der Wechselspannung im Wechselstromnetz (1) entgegengesetzten Phase arbeitet oder betrieben wird und/oder wobei bei oder durch Aktivierung des Betreibens des Umrichters (12, 12a, 12b) als aktive Frequenzsperre der Betrieb der Regelvorrichtung in der der Wechselspannung im Wechselstromnetz (1) entgegengesetzten Phase deaktiviert wird.

10. Verfahren nach einem der Ansprüche 1 bis 9, **dadurch gekennzeichnet, dass** das Generatorsystem (7) einen generatorseitigen Wechselrichter (12a) und einen netzseitigen Wechselrichter (12b) aufweist, von denen wenigstens ein Wechselrichter (12a, 12b) als aktive Frequenzsperre betrieben wird, wobei der netzseitige Wechselrichter (12b) als aktive Frequenzsperre betrieben wird und/oder wobei der generatorseitige Wechselrichter (12a) als aktive Frequenzsperre betrieben wird, und/oder dass das Generatorsystem (7) mehrere Umrichter (12, 12a, 12b) aufweist, wobei jeder Umrichter (12, 12a, 12b) als aktive Frequenzsperre betrieben wird.

11. Verfahren zum Betreiben einer Windenergieanlage mit einem Umrichter (12, 12a, 12b), wobei der Umrichter (12, 12a, 12b) gemäß dem Verfahren nach einem der Ansprüche 1 bis 10 betrieben wird.

12. Verwendung eines Verfahrens nach einem der Ansprüche 1 bis 10 zum Betreiben eines Umrichters (12, 12a, 12b) eines an ein elektrisches Wechselstromnetz (1) anschließbaren stromerzeugenden Generatorsystems (7), insbesondere einer Windenergieanlage, wobei der Umrichter (12, 12a, 12b) mittels einer den Umrichter (12, 12a, 12b) regelnden Regelvorrichtung (24) als aktive Tonfrequenzsperre gegenüber netzseitigen und/oder generatorseitigen Tonfrequenzströmen betrieben wird.

13. Computerprogrammprodukt, das Programmcodemittel beinhaltet, **dadurch gekennzeichnet, dass** es ein Verfahren nach einem der Ansprüche 1 bis 10 implementiert, wenn es auf einer Datenverarbeitungsanlage ausgeführt wird, die als Regelvorrichtung (24) ausgebildet ist.

14. Stromerzeugendes Generatorsystem (7), insbesondere einer Windenergieanlage, mit Regelvorrichtung (24) für einen Umrichter (12, 12a, 12b) mit Computerprogrammprodukt nach Anspruch 13.

15. Windenergieanlage (4) mit stromerzeugendem Generatorsystem (7) nach Anspruch 14.

## Claims

1. A method of operating a converter, particularly of a wind turbine generator system, (12, 12a, 12b) of an electric power-producing generator system (7) connectable to an alternating current electric network (1), particularly a wind turbine generator system, wherein the converter (12, 12a, 12b) is operated by means of a control device (24) controlling the converter (12, 12a, 12b) as an active audio frequency block, including the following method steps:
- detecting at least one audio frequency current of at least one predetermined audio frequency,
- determining an alternating current profile, which is to be transmitted to the converter (12, 12a, 12b), in the control device (24), wherein at least one detected audio frequency current is at least partially impressed on the alternating current profile,
- producing the alternating current profile in the converter (12, 12a, 12b) and
- feeding the alternating current profile produced by the converter (12, 12a, 12b) into the alternating current network (1).

2. A method as claimed in claim 1, **characterised in that** audio frequency currents in the network are detected and/or that the audio frequency currents are determined at a network feed point and/or are controlled at a network feed point and/or that a ripple control signal is fed in by means of the converter.

3. A method as claimed in claim 2, **characterised in that** the audio frequency currents in the network are filtered out of the alternating current in the network by means of at least one band pass filter (19) and are transferred to the control device (24) or that the audio frequency currents in the network are detected in the control device (24).

4. A method as claimed in one of claims 1 to 3, **characterised in that** the audio frequency currents in the generator are detected, wherein the audio frequency currents in the generator are filtered out of the alternating current in the generator by means of at least one band pass filter and transmitted to the control device (24) and/or are detected in the control device (24).

5. A method as claimed in one of claims 1 to 4, **characterised in that** the active audio frequency block is adjustable or adjusted to a predetermined, limited frequency range for single frequency or narrow band signals in the network, wherein the predetermined, limited frequency range is adjustable or adjusted to a ripple control frequency, wherein adjacent higher harmonic frequencies of the base frequency in the frequency spectrum are attenuated with respect to the ripple control frequency or wherein the predetermined limited frequency range is adjustable or adjusted to at least one higher harmonic frequency of the base frequency.

6. A method as claimed in one of claims 2 to 5, **characterised in that** the audio frequency currents in the network are impressed on the voltage profile produced by the converter (12, 12a, 12b), wherein the audio frequency currents in the network are impressed on the voltage profile produced by the converter (12, 12a, 12b) with the same or an altered phase.

7. A method as claimed in one of claims 4 to 6, **characterised in that** the audio frequency currents in the generator are impressed on the voltage profile produced by the converter (12, 12a, 12b) with a reversed phase.

8. A method as claimed in one of claims 1 to 7, **characterised in that** a phase shift of the base frequency produced by the converter (12, 12a, 12b) with respect to the alternating current in the network is adjustable or adjusted by means of the control device (24) or that a voltage profile is produced by the addition of the base frequency of the alternating network (1) and the frequencies of the audio frequency currents in the network and/or the generator with their respective phases in the control device (24) controlling the converter (12, 12a, 12b).

9. A method as claimed in one of claims 1 to 8, **characterised in that** the converter (12, 12a, 12b) is controlled by means of a data processing installation constructed in the form of a control device (24) and/or that the control device (24) operates or is operated in the same phase as the alternating current in the alternating current network (1), wherein the control device (24) additionally operates or is operated in the opposite phase to the alternating current in the alternating current network (1) and/or wherein on or as a result of initiation of the operation of the converter (12, 12a, 12b) as an active frequency block the operation of the control device in the phase opposite to the alternating current in the alternating current network (1) is disabled.

10. A method as claimed in one of claims 1 to 9, **characterised in that** the generator system (7) includes an inverter (12a) on the generator side and an inverter (12b) on the network side, of which at least one inverter (12a, 12b) is operated as an active frequency block, wherein the inverter (12b) on the network side is operated as an active frequency block and/or wherein the inverter (12a) on the generator side is operated as an active frequency block and/or that the generator system (7) includes a plurality of converters (12, 12a, 12b), wherein each converter (12, 12a, 12b) is operated as an active frequency block.

11. A method of operating a wind turbine generator system with a converter (12, 12a, 12b), wherein the converter (12, 12a, 12b) is operated in accordance with the method as claimed in one of claims 1 to 10.

12. The use of a method as claimed in one of claims 1 to 10 for operating a converter (12, 12a, 12b) of an electric power-producing generator system (7) connectable to an electric alternating current network, particularly a wind turbine generator system, wherein the converter (12, 12a, 12b) is operated by means of a control device (24) controlling the converter (12, 12a, 12b) as an active audio frequency block with respect to audio frequency currents in the network and/or the generator.

13. A computer program product, which contains program code means, **characterised in that** it implements a method as claimed in one of claims 1 to 10 when it is executed on a data processing installation, which is constructed as a control device (24).

14. An electric power-producing generator system (7), particularly a wind turbine generator plant, with a control device (24) for a converter (12, 12a, 12b) with a computer program product as claimed in claim 13.

15. A wind turbine generator system (4) with an electric current-producing generator system (7) as claimed in claim 14.

## Revendications

1. Procédé pour faire fonctionner un convertisseur, notamment une éolienne (12, 12a, 12b), d'un système générateur produisant du courant (7) et pouvant être raccordé à un réseau électrique à courant alternatif (1), notamment une éolienne, dans lequel le convertisseur (12, 12a, 12b) est utilisé comme système actif d'arrêt de fréquences acoustiques au moyen d'un dispositif de régulation (24) régulant le convertisseur (12, 12a, 12b), comprenant les étapes consistant à :
- détecter au moins un courant de fréquence acoustique à partir d'au moins une fréquence acoustique prédéterminée,
- identifier, dans le dispositif de régulation (24), un profil de courant alternatif à transmettre au convertisseur (12, 12a, 12b), au moins un courant de fréquence acoustique détecté étant au moins partiellement appliqué au profil de courant alternatif,
- générer le profil de courant alternatif dans le convertisseur (12, 12a, 12b) et
- injecter le profil de courant alternatif généré par le convertisseur (12, 12a, 12b) dans le réseau à courant alternatif (1).

2. Procédé selon la revendication 1, **caractérisé en ce que** des courants de fréquences acoustiques côté réseau sont détectés et/ou **en ce que** les courants de fréquences acoustiques sont recueillis sur un point d'alimentation du réseau, et/ou régulés sur un point d'alimentation du réseau, et/ou **en ce qu'**un signal de télécommande centralisée est injecté au moyen du convertisseur.

3. Procédé selon la revendication 2, **caractérisé en ce que** les courants de fréquences acoustiques côté réseau sont filtrés à partir du courant alternatif côté réseau au moyen d'au moins un filtre passe-bande (19) et sont transmis au dispositif de régulation (24), ou **en ce que** les courants de fréquences acoustiques côté réseau sont détectés dans le dispositif de régulation (24).

4. Procédé selon l'une des revendications 1 à 3, **caractérisé en ce que** des courants de fréquences acoustiques côté générateur sont détectés, les courants de fréquences acoustiques côté générateur étant filtrés à partir du courant alternatif côté générateur au moyen d'au moins un filtre passe-bande et étant transmis au dispositif de régulation (24) et/ou étant détectés dans le dispositif de régulation (24).

5. Procédé selon l'une des revendications 1 à 4, **caractérisé en ce que** le système actif d'arrêt de fréquences acoustiques est ajustable ou ajusté à une plage de fréquences limitée prédéterminée pour des signaux côté réseau en monofréquence ou à bande étroite, la plage de fréquences limitée prédéterminée étant ajustable ou ajustée à une fréquence de télécommande centralisée, des fréquences supérieures harmoniques, voisines dans le spectre de fréquence, de la fréquence fondamentale étant affaiblies vis-à-vis de la fréquence de télécommande centralisée, ou la plage de fréquences limitée prédéterminée étant ajustable ou ajustée à au moins une fréquence supérieure harmonique de la fréquence fondamentale.

6. Procédé selon l'une des revendications 2 à 5, **caractérisé en ce que** les courants de fréquences acoustiques côté réseau sont appliqués au profil de tension généré par le convertisseur (12, 12a, 12b), les courants de fréquences acoustiques côté réseau étant appliqués au profil de tension généré par le convertisseur (12, 12a, 12b) avec une phase identique ou modifiée.

7. Procédé selon l'une des revendications 4 à 6, **caractérisé en ce que** les courants de fréquences acoustiques côté générateur sont appliqués au profil de tension généré par le convertisseur (12, 12a, 12b) avec une phase inverse.

8. Procédé selon l'une des revendications 1 à 7, **caractérisé en ce qu'**un décalage de phase de la fréquence fondamentale générée par le convertisseur (12, 12a, 12b) est ajustable ou ajusté au courant alternatif côté réseau au moyen du dispositif de régulation (24), ou **en ce qu'**un profil de tension est formé en ajoutant la fréquence fondamentale du réseau à courant alternatif (1) et les fréquences des courants de fréquences acoustiques côté réseau et/ou côté générateur avec leurs phases respectives dans le dispositif de régulation (24) régulant le convertisseur (12, 12a, 12b).

9. Procédé selon l'une des revendications 1 à 8, **caractérisé en ce que** le convertisseur (12, 12a, 12b) est régulé au moyen d'une installation de traitement de données conçue comme dispositif de régulation (24) et/ou **en ce que** le dispositif de régulation (24) travaille ou est exploité en phase avec la tension alternative dans le réseau à courant alternatif (1), le dispositif de régulation (24) travaillant ou étant exploité en supplément dans la phase opposée à la tension alternative dans le réseau à courant alternatif (1) et/ou le fonctionnement du dispositif de régulation étant désactivé dans la phase opposée à la tension alternative dans le réseau à courant alternatif (1) en cas d'activation ou par activation du fonctionnement du convertisseur (12, 12a, 12b) en tant que système actif d'arrêt de fréquences.

10. Procédé selon l'une des revendications 1 à 9, **caractérisé en ce que** le système générateur (7) comprend un onduleur (12a) côté générateur et un onduleur (12b) côté réseau, dont au moins un onduleur (12a, 12b) fonctionne comme un système actif d'arrêt de fréquences, l'onduleur côté réseau (12b) fonctionnant comme un système actif d'arrêt de fréquences et/ou l'onduleur côté générateur (12a) fonctionnant comme un système actif d'arrêt de fréquences, et/ou **en ce que** le système générateur (7) comprend plusieurs convertisseurs (12, 12a, 12b), chaque convertisseur (12, 12a, 12b) fonctionnant comme un système actif d'arrêt de fréquences.

11. Procédé pour faire fonctionner une éolienne avec un convertisseur (12, 12a, 12b), dans lequel le convertisseur (12, 12a, 12b) fonctionne conformément au procédé selon l'une des revendications 1 à 10.

12. Utilisation d'un procédé selon l'une des revendications 1 à 10 pour faire fonctionner un convertisseur (12, 12a, 12b) d'un système générateur produisant du courant (7) et pouvant être raccordé à un réseau électrique à courant alternatif (1), notamment une éolienne, le convertisseur (12, 12a, 12b) étant utilisé comme système actif d'arrêt de fréquences acoustiques vis-à-vis de courants de fréquences acoustiques côté réseau et/ou côté générateur, au moyen d'un dispositif de régulation (24) régulant le convertisseur (12, 12a, 12b).

13. Produit programme d'ordinateur comprenant des moyens de code de programme, **caractérisé en ce qu'**il met en oeuvre un procédé selon l'une des revendications 1 à 10, lorsqu'il est exécuté sur une installation de traitement de données qui est conçue comme un dispositif de régulation (24).

14. Système générateur (7) produisant du courant, en particulier une éolienne, comprenant un dispositif de régulation (24) pour un convertisseur (12, 12a, 12b) comportant un produit programme d'ordinateur selon la revendication 13.

15. Eolienne (4) comprenant un système générateur (7) produisant du courant selon la revendication 14.
